# EUROPEAN PATENT APPLICATION

(11) **EP 2 754 408 A2**
(43) Date of publication of application: **16.07.2014**
(21) Application number: 13152178.3
(22) Date of filing: 22.01.2013
(51) Int. Cl.: A61C 13/00, A61C 8/00

(54) **Abutment production system and method**

(30) Priority: 11.01.2013 TR 201300434
(71) Applicant: Serce, Ibrahim, Izmir (TR)
(72) Inventor: Serce, Ibrahim, Izmir (TR)
(74) Representative: Cayli, Hülya

(57) **Abstract**

The abutment (A) production system according to the present invention comprises at least one unprocessed abutment (A) having at least one block-shaped body (1) which may have different geometric shapes, at least one connection part (2) which is disposed on at least one side of the body (1) and is suitable for fixation to at least one implant (not illustrated in the figures), and at least one engagement member (3) extending from at least one side of the body (1) preferably in the form of a ridge or a groove along the body (1); at least one retaining element (4) comprising at least one groove or a ridge (4a) suitable to receive said engagement member (3) such that the unprocessed abutment (A) is fixed thereto by means of the engagement member (3) provided on the body (1); and at least one processing unit having at least one processing element shaping the unprocessed abutment (A) fixed to the retaining element (4).

## Description

### Field of Invention

The present invention relates to systems and methods for producing tailor-made dental abutment.

### Prior Art

Nowadays, fastening elements (preferably screws) which are widely used in dental implants (replacement of a missing tooth by a prosthetic one) are fixed to the jaw in order to provide an artificial tooth root, whereas a prosthetic tooth is placed onto the part of that root staying above the gingiva. In order to fix the prosthetic tooth to the implant, an abutment is used which protrudes from the gingiva. The abutment varies in terms of size and form according to the size of the tooth to be implanted, as well as to the form of the mouth and the jaw of the respective person. Standard abutments are produced and used in the prior art, which may comply with different forms of jaws and teeth.

For instance, the patent document WO2012134051A2 according to the prior art discloses a method and a system for producing abutments in a standard size and shape. These abutments produced in standard sizes and shapes, however, can not comply with all kinds of jaw shapes. For this reason, tailor-made abutment production has gained popularity particularly in the recent years. In the tailor-made abutment production, special abutments are produced during therapy in line with the form of the mouth/jaw of the person undergoing implantation and with the tooth to be implanted. The tailor-made abutment production according to the prior art, however, provides either high quality abutments using very expensive machines, or poor quality abutments using inexpensive machines (e.g. sliding bench). This, in turn, forces people to make a selection among expensive or poor quality abutments.

### Brief Description of Invention

The abutment production system developed according to the present invention comprises at least one unprocessed abutment having at least one block-shaped body which may have different geometric shapes, at least one connection part which is disposed on at least one side of the body and is suitable for fixation to at least one implant (not illustrated in the figures), and at least one engagement member extending from at least one side of the body preferably in the form of a ridge or a groove along the body; at least one retaining element which comprises at least one groove or a ridge suitable to receive said engagement member such that the unprocessed abutment is fixed thereto by means of the engagement member provided on the body; and at least one processing unit having at least one processing element which shapes the unprocessed abutment fixed to the retaining element.

Since unprocessed abutments are produced by a producer firm, the production method developed according to the present invention makes it possible to produce said connection parts such that these parts are fixed to an implant in a flawless manner. Furthermore, since the body is tailor made in dental prosthesis laboratories, clinics, or background centers, it is also made possible to fix a processed abutment to a prosthetic tooth in a flawless manner. Since an unprocessed abutment is produced by a producer firm and processed in dental prosthesis laboratories, clinics, or background centers, it is further made possible to carry out the abutment production process in a quality manner with low costs.

### Object of Invention

The object of the present invention is to develop a production system for producing tailor-made abutments and an abutment produced using this system.

Another object of the present invention is to develop a production method for producing inexpensive and high-quality abutments.

### Description of Figures

Illustrative embodiments of the tailor-made abutment production system developed according to the present invention are illustrated in the accompanying figures briefly described hereunder.
Figure 1 is a perspective illustration of an unprocessed abutment.
Figure 2 is another perspective illustration of an unprocessed abutment.
Figure 3 is a perspective illustration of a further unprocessed abutment.
Figure 4 is a perspective illustration of an abutment production system.
Figure 5 is a perspective illustration of another abutment production system.
Figure 6 is a cross-sectional illustration of an unprocessed abutment.
Figure 7 is a cross-sectional illustration of another unprocessed abutment.
Figure 8 is a cross-sectional illustration of a processed abutment.
Figure 9 is a perspective illustration of a connection element used to connect an abutment to a tooth implant.
Figure 10 is a perspective illustration of an alternative abutment production system.
Figure 11 is a perspective illustration of another abutment production system.

The parts in said figures are individually referenced as following.

| Abutment | (A) |
|---|---|
| Body | (1) |
| Connection part | (2) |
| Engagement member | (3) |
| Retaining element | (4) |
| Groove/Ridge | (4a) |
| Support element | (4b) |
| Socket | (4c) |
| Wall | (5) |
| Cavity | (6) |
| Part | (6a, 6b, 7a, 7b) |
| Connection element | (7) |

### Description of Invention

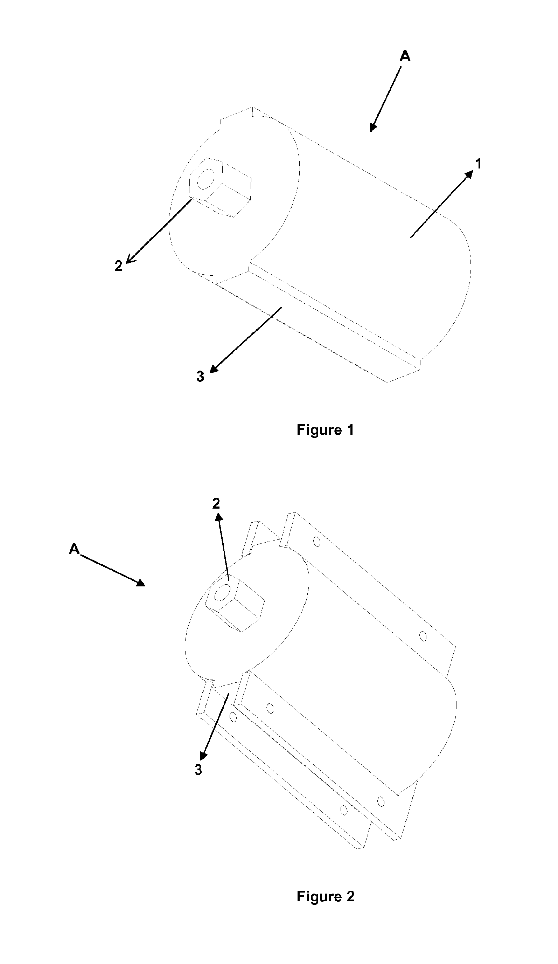

The abutment production system developed according to the present invention comprises at least one unprocessed abutment (A), as exemplarily illustrated in figures 1-3, having at least one block-shaped body (1) which may have different geometric shapes, at least one connection part (2) which is disposed on at least one side of the body (1) and is suitable for fixation to at least one implant (not illustrated in the figures), and at least one engagement member (3) extending from at least one side of the body (1) preferably in the form of a ridge or a groove along the body (1); at least one retaining element (4) comprising at least one groove or a ridge (4a) suitable to receive said engagement member (3) such that the unprocessed abutment (A) is fixed thereto by means of the engagement member (3) provided on the body (1); and at least one processing unit (not illustrated in the figures) having at least one processing element shaping the body (1) portion of the unprocessed abutment (A) fixed to the retaining element (4) preferably by cutting the same. According to the present invention, if the engagement member (3) has a ridge form, it is received by the groove (4a) of the retaining element (4), but if the engagement member (3) has a groove form, the ridge (4a) of the retaining element (4) is received by the engagement member (3). Said processing unit is preferably a CNC (computer numerical control) processing unit.

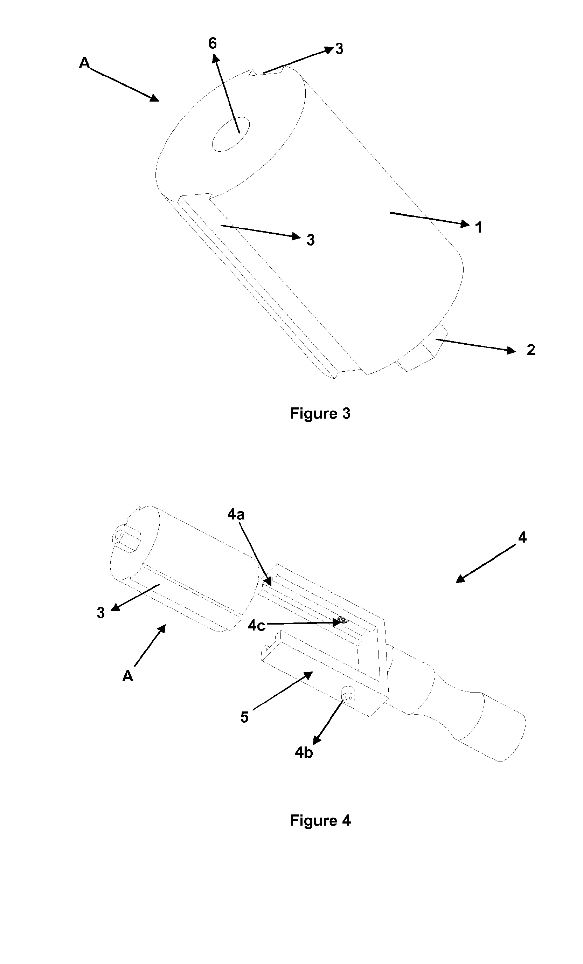

In a preferred embodiment according to the present invention as illustrated in figures 4-5, the retaining element (4) is provided preferably with at least one socket (4c) on at least one wall (5) thereof and at least one support element (4b) exerting force onto the engagement member (3) by passing through said socket (4c). Thus, the abutment (A) is properly connected to the retaining element (4) (by virtue of placing the engagement member (3) to the groove/ridge (4a) and exerting force on the engagement member (3) by means of the support element (4b)) and accordingly the force exerted to the abutment (A) is equally distributed.

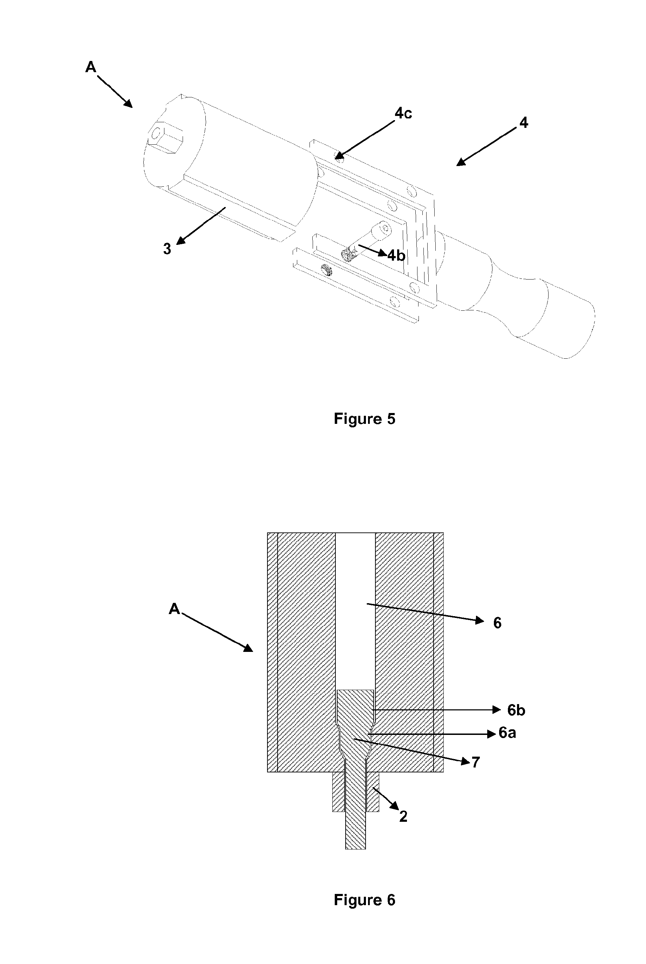

As illustrated representatively in figures 6-8, an abutment (A) developed according to another embodiment of the present invention (it may be a processed abutment or an unprocessed abutment) comprises at least one body (1); at least one connection part (2) which is suitable for fixation to at least one implant (not illustrated in the figures) preferably disposed on at least one side of the body (1); and at least one cavity (6), which is provided in the body (1), has preferably a cylindrical form starting from the connection part (2) to another side of the body (1), and is suitable to receive at least one connection element (7) for connecting the abutment (A) to an implant. The section of said cavity (6) which is close to the connection side comprises at least two parts (6a, 6b) having different widths. In a representative embodiment of the present invention, the width of the part (6a) of said cavity (6) which is close to the connection part (2) is lower than the width of the part (6b) which is far from the connection part (2). In this embodiment, the connection element (7) used to fix the abutment (A) to the implant comprises in the head section thereof at least two parts (7a, 7b) having different widths. The parts (7a, 7b) of the connection element (7) are structured so as to be received by said parts (6a, 6b) of the cavity (6). In this embodiment, when the abutment (A) is fixed to the implant by means of said connection element (7), the tightening force resulting from this connection is distributed almost uniformly on the body (1) of the abutment (A) by means of the parts (6a, 6b) of the cavity (6) which have different widths. The connection part (2) is prevented against damages which may occur in time and thus the expected life of the abutment (A) is lengthened by virtue of not exerting said force to the connection part (2) only.

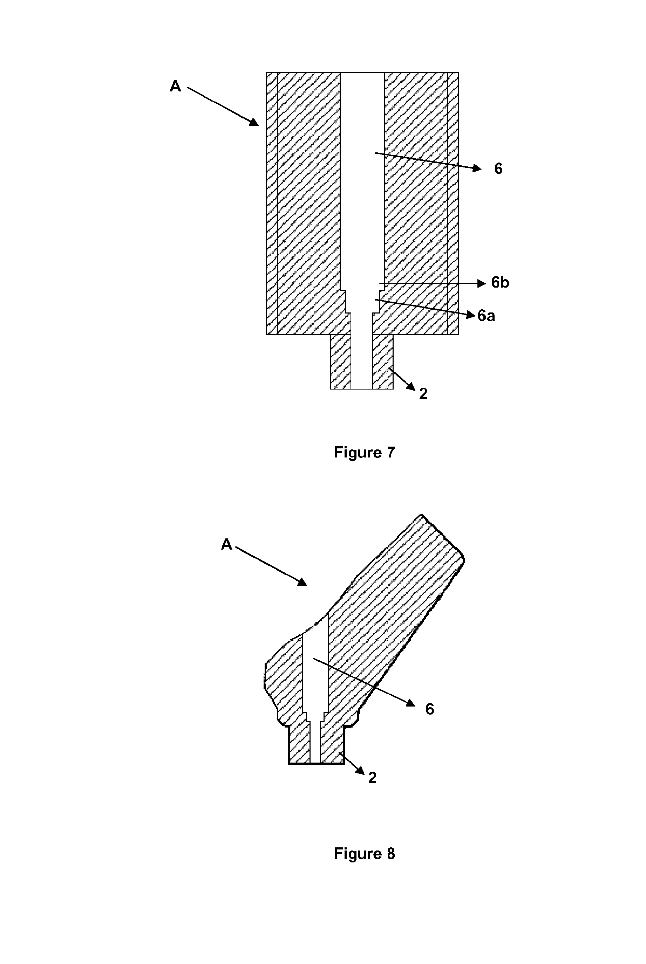

In a preferred embodiment of the present invention, the change of the width between said parts (6a, 6b) of the cavity (6) having different widths is abrupt as illustrated in Figure 7. In an alternative embodiment of the present invention, in turn, a sloped surface is provided between the parts (6a, 6b) having different widths. Thus, the width variation is made continues.

In the production method developed according to the present invention, an unprocessed abutment (A) is fixed to the retaining element (4) by engaging the engagement member (3) disposed on the body (1) to the groove/ridge (4a) of the retaining element (4). During the shaping process of the abutment (A) by means of the processing unit, both the force can be distributed uniformly on the body (1), and the abutment (A) can be prevented against dislocation during the process by virtue of engaging the ridge and the groove of the engagement member (3) and the retaining element (4) respectively. Thus, the abutment (A) can be shaped in desired sizes and the processed abutment (A) is then separated from the retaining element (4) and used in an implantation process.

According to a preferred embodiment of the present invention, an unprocessed abutment (A) is produced by a producer firm (an unprocessed abutment (A) can comprise different materials such as zirconium, titanium or PEEK (polyether ether ketone) plastic) under certain standards (e.g. at different defined sizes and shapes). Since the connection part (2) is produced precisely in this production process, no problems are encountered as the unprocessed abutment (A) is fixed to the implant. As for the shaping process of the body (1), it is carried out using CNC processing machines present in dental prosthesis laboratories, clinics, or background centers. Thus, the production process of tailor-made abutments is carried out in an inexpensive and quality manner.

Since unprocessed abutments (A) are produced by a producer firm in the production system according to the present invention, said connection part (2) can be produced in such a way that it can be fixed to an implant in a flawless manner. Furthermore, since the body (1) is tailor made in dental prosthesis laboratories, clinics, or background centers, it is also made possible to fix a processed abutment to a prosthetic tooth in a flawless manner. Since an unprocessed abutment (A) is produced by a producer firm and processed in dental prosthesis laboratories, clinics, or background centers, it is further made possible to carry out the abutment production process in a quality manner with low costs.

In representative embodiments of the present invention as illustrated in figures 4 and 5, the retaining element (4) is structured suitably for use in Cerec (Sirona) type CNC processing machines. Since Cerec type CNC machines are used in many dental prosthesis laboratories, clinics, or background centers, the abutment production system developed according to the present invention can be used in known systems without extra costs by virtue of said retaining element (4). In this embodiment, a processed abutment is produced with at least one processing element cutting and thus shaping the body (1) of this abutment (A) fixed to said groove/recess (4a).

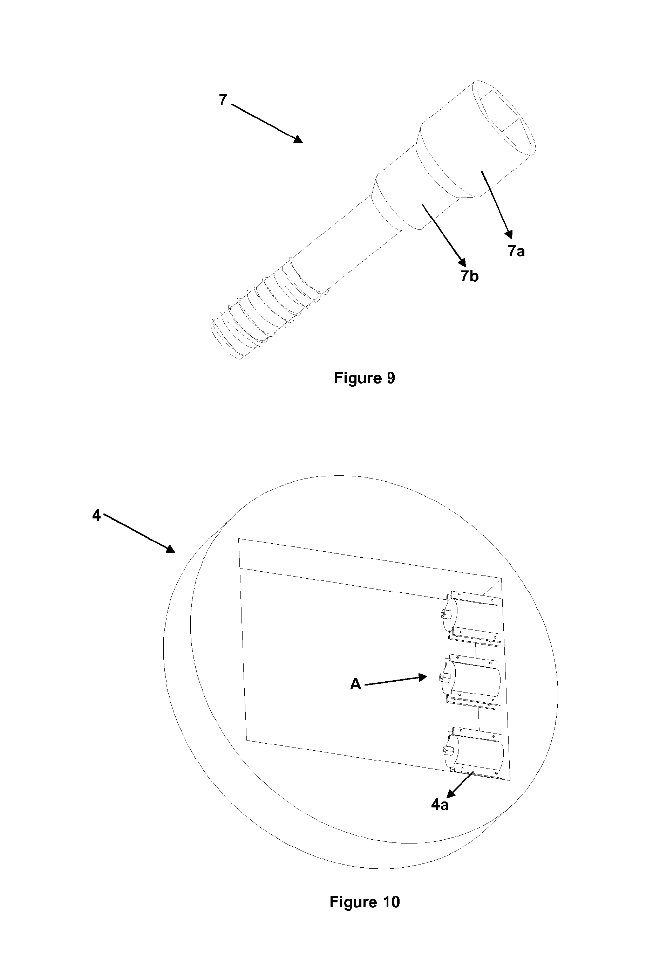

In a representative embodiment of the present invention illustrated in Figure 10, said retaining element (4) is structured to retain more than one unprocessed abutment (A). According to this embodiment, a plurality of unprocessed abutments (A) can be coupled to a CNC processing machine. Thus, a plurality of tailor-made abutment (A) can be produced at once.

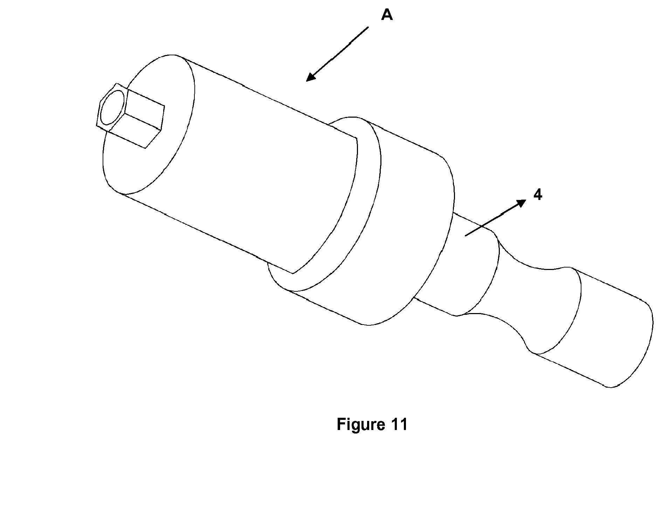

An alternative abutment production system developed according to the present invention as illustrated in Figure 11 comprises at least one unprocessed abutment (A) having at least one block-shaped body (1) which may have different geometric shapes and at least one connection part (2) which is disposed on at least one side of the body (1) and is suitable for fixation to at least one implant; at least one retaining element (4) to which the unprocessed abutment (A) is fixed from one side thereof by means of gluing; and at least one processing unit having at least one processing element shaping the unprocessed abutment (A) fixed to the retaining element (4). According to this embodiment, since the unprocessed abutment (A) is fixed to the retaining element (4) by means of gluing using at least one gluing element (not illustrated in the figures), the production process is completed safely in a relatively shorter time period. Additionally, since the unprocessed abutment (A) comprises no projecting connection member to be connected to the retaining element (4), the volume of the unprocessed abutment (A) is reduced. Thus, the material making up the unprocessed abutment (A) is used more efficiently.

## Claims

1. A production system for an abutment (A) which is suitable for fixation from one side thereof to at least one implant fixed to the jaw bone and from the other side thereof to at least one prosthetic tooth, **characterized by** comprising
- at least one unprocessed abutment (A) having at least one block-shaped body (1) which may have different geometric shapes, at least one connection part (2) which is disposed on at least one side of the body (1) and is suitable for fixation to at least one implant, and at least one engagement member (3) extending from at least one side of the body (1) preferably in the form of a ridge or a groove along the body (1);
- at least one retaining element (4) comprising at least one groove or a ridge (4a) suitable to receive said engagement member (3) such that the unprocessed abutment is fixed thereto by means of the engagement member (3) provided on the body (1),
- at least one processing unit having at least one processing element shaping the unprocessed abutment (A) fixed to the retaining element (4).

2. An abutment production system according to Claim 1, **characterized in that** said engagement member (3) is in the form of a ridge.

3. An abutment production system according to Claim 2, **characterized by** comprising at least one groove (4a) suitable to receive said engagement member (3).

4. An abutment production system according to Claim 1, **characterized in that** said engagement member (3) is in the form of a groove.

5. An abutment production system according to Claim 3, **characterized in that** the retaining element (4) comprises at least one ridge suitable to engage to the groove of the engagement member (3).

6. An abutment production system according to Claim 1, **characterized in that** the processing unit is a CNC processing unit.

7. An abutment production system according to Claim 1, **characterized in that** said retaining element (4) comprises at least one wall (5), at least one socket (4c) provided on said wall (5) and at least one support element (4b) being passed through said socket (4c) to exert force onto the engagement member (3).

8. An abutment, suitable for fixation from one side thereof to at least one implant fixed to the jaw bone and from the other side thereof to at least one prosthetic tooth, and comprising at least one body (1); at least one connection part (2) which is suitable for fixation to at least one implant, and at least one cavity (6) which is provided in the body (1), starts from the connection part (2) and extends towards another side of the body (1), and is suitable for the engagement of at least one connection element (7) in order to fix the abutment (A) to said implant, **characterized in that**
- the section of said cavity (6) which is close to the connection side comprises at least two parts (6a, 6b) having different widths.

9. An abutment according to Claim 8, **characterized in that** the width of the part (6a) of said cavity (6) which is close to the connection part (2) is lower than the width of the part (6b) which is far from the connection part (2).

10. An abutment (A) according to Claim 8, **characterized in that** the connection element (7) used to fix the abutment (A) to the implant comprises in the head section thereof at least two parts (7a, 7b) which have different widths and are suitable to be placed to said parts (6a, 6b) of the cavity (6).

11. A production system for an abutment (A) which is suitable for fixation from one side thereof to at least one implant fixed to the jaw bone and from the other side thereof to at least one prosthetic tooth, **characterized by** comprising
- at least one unprocessed abutment (A) having at least one block-shaped body (1) which may have different geometric shapes and at least one connection part (2) which is disposed on at least one side of the body (1) and is suitable for fixation to at least one implant;
- at least one retaining element (4) to which the unprocessed abutment (A) is fixed from one side thereof by means of gluing, and
- at least one processing unit having at least one processing element shaping the unprocessed abutment (A) fixed to the retaining element (4).

12. A production method for use in the production system according to claims 1 to 7, **characterized by** comprising the steps of
- fixing an unprocessed abutment (A) to the retaining element (4) by engaging the engagement member (3) disposed on the body (1) to the groove/ridge (4a) of the retaining element (4); and
- shaping the abutment (A) by means of the processing unit.
